# EUROPEAN PATENT APPLICATION

(11) **EP 2 043 403 A2**
(43) Date of publication of application: **01.04.2009**
(21) Application number: 08154587.3
(22) Date of filing: 16.04.2008
(51) Int. Cl.: H04W 72/04

(54) **Wireless communication systems**

(30) Priority: 28.09.2007 GB 0719029
(71) Applicant: Fujitsu Limited, Kawasaki-shi, Kanagawa 211-8588 (JP)
(72) Inventor: Zhou, Yuefeng, West Sussex, RH16 1UZ (GB); Power, Kevin, Northolt, Middlesex UB5 6JH (GB); Hart, Michael John Beems, London, W12 9LL (GB)
(74) Representative: Stebbing, Timothy Charles

(57) **Abstract**

A signalling method in a frame-based wireless communication system allowing a base station (BS) to inform fixed or mobile subscriber stations (MS) of resource allocations without excessive signalling and processing overhead. In one embodiment, in addition to normal resource allocation information such as a DL-MAP or UL-MAP, IDs of MSs or connections, for which the resource allocation has been modified, cancelled, or initialized, are listed at the start of the frame so that each MS can identify itself (or its connection) in the list. Only those mobile stations for which the list is relevant need to act on the resource allocation information. In another embodiment, the BS attaches a period of validity to each allocation of resources which is transmitted along with the normal resource allocation information. This frees the BS from having to repeat the same information in subsequent frames, and each MS can go on using the same resource during the period of validity without needing to check for updates.

## Description

The present invention relates to wireless communication systems of the type in which a base station (BS) communicates with multiple fixed or mobile subscriber stations (MS), and more particularly to resource allocation within such systems.

Recently, various standards have been developed for data communication over broadband wireless links. One such standard is set out in the IEEE 802.16 specifications and is commonly known as WiMAX. The specifications include IEEE 802.16-2004, primarily intended for systems having fixed subscriber stations, and IEEE 802.16e-2005 which among other things provides for mobile subscriber stations. In the following description, the abbreviation MS is used as shorthand for both mobile and fixed subscriber stations. The term "user" is also used equivalently to mobile or fixed subscriber station.

The entire contents of IEEE Std 802.16-2004 "Air Interface for Fixed Broadband Wireless Access Systems" and IEEE Std 802.16e-2005 "Amendment 2 and Corrigendum 1 to IEEE Std 802.16-2004" are hereby incorporated by reference. IEEE 802.16 defines wireless communication systems in which the mobile stations communicate with a base station within range, the range of a base station defining at least one "cell". By deploying base stations at suitable positions within a given geographical area, and/or by providing multiple antennas in the same base station, a contiguous group of cells can be created to form a wide-area network. In this specification, the terms "network" and "system" will be used equivalently.

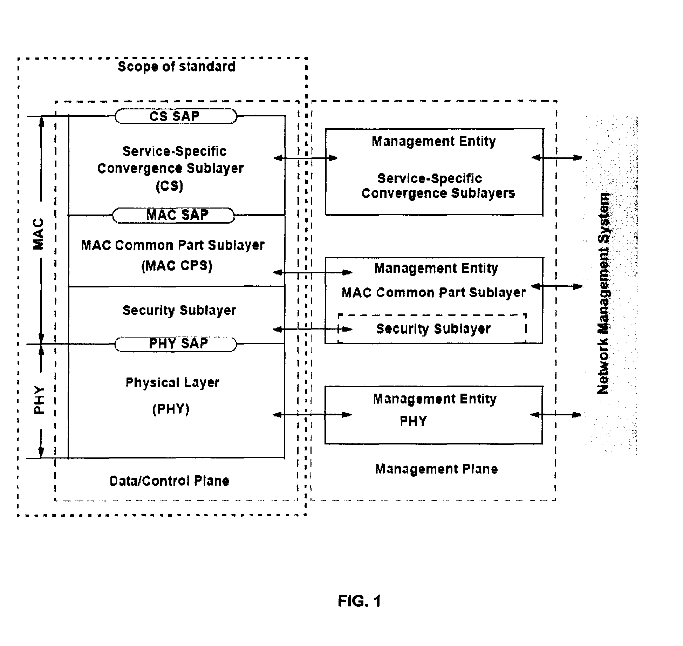

In systems of the above type, data is communicated by exchange of packets between the mobile stations and base station whilst a connection (management connection or transport connection) is maintained between them. Below, the term "channel" is sometimes used to refer to such a connection between one MS and its BS, as should be clear from the context. The direction of transmission of packets from the subscriber station to the base station is the uplink (UL), and the direction from the base station to the subscriber station is the downlink (DL). The packets have a defined format which follows a layered protocol applied to the system and its component radio devices. Protocol layers relevant to packets as such are the so-called physical layer (PHY) and media access layer (MAC). In the IEEE 802.16-2004 specification, these protocol layers form a protocol "stack" as shown in Fig. 1.

The media access layer shown in Fig. 1 is the protocol layer of most concern in the invention to be described. It is responsible for handling various functions including network access, bandwidth allocation, and maintaining connections. This includes controlling access of the BS and SS's to the radio medium on the basis of "frames" which are the predetermined unit of time in the system, and which are divided in the time and frequency domain into a number of slots, and when utilising multiple transmit antennas may also be divided spatially into a number of streams.

A connection between a base station and subscriber station (more precisely, between MAC layers in those devices - so-called peer entities) is assigned a connection ID (CID) and the base station keeps track of CIDs for managing its active connections or service flows. A service flow could represent, for example, a voice call conducted by the user of the MS. In addition, mobile stations typically have their own identifying codes. Both such types of identifier (connection or MS) are referred to simply as "ID" in the following description.

Various physical layer implementations are possible in an IEEE 802.16 network, depending on the available frequency range and application; for example, a time division duplex (TDD) mode and a frequency division duplex (FDD) mode as described below. The PHY layer also defines the transmission technique such as OFDM (orthogonal frequency division multiplexing) or OFDMA (orthogonal frequency division multiple access), which techniques will now be outlined briefly.

In OFDM, a single data stream is modulated onto N parallel sub-carriers, each sub-carrier signal having its own frequency range. This allows the total bandwidth (i.e. the amount of data to be sent in a given time interval) to be divided over a plurality of sub-carriers thereby increasing the duration of each data symbol. Since each sub-carrier has a lower information rate, multi-carrier systems benefit from enhanced immunity to channel induced distortion compared with single carrier systems. This is made possible by ensuring that the transmission rate and hence bandwidth of each subcarrier is less than the coherence bandwidth of the channel. As a result, the channel distortion experienced on a single subcarrier is frequency independent and can hence be corrected by a simple phase and amplitude correction factor. Thus the channel distortion correction entity within a multicarrier receiver can be of significantly lower complexity of its counterpart within a single carrier receiver when the system bandwidth is in excess of the coherence bandwidth of the channel.

An OFDM system uses a plurality of sub-carrier frequencies which are orthogonal in a mathematical sense so that the sub-carriers' spectra may overlap without interference due to the fact they are mutually independent. The orthogonality of OFDM systems removes the need for guard band frequencies and thereby increases the spectral efficiency of the system. OFDM has been proposed and adopted for many wireless systems. In an OFDM system, a block of N modulated parallel data source signals is mapped to N orthogonal parallel sub-carriers by using an Inverse Discrete or Fast Fourier Transform algorithm (IDFT/IFFT) to form a signal known as an "OFDM symbol" in the time domain at the transmitter. Thus, an "OFDM symbol" is the composite signal of all N sub-carrier signals. At the receiver, the received time-domain signal is transformed back to frequency domain by applying Discrete Fourier Transform (DFT) or Fast Fourier Transform (FFT) algorithm.

OFDMA (Orthogonal Frequency Division Multiple Access) is a multiple access variant of OFDM. It works by assigning a subset of the sub-carriers to an individual subscriber. This allows simultaneous transmission from several users leading to better spectral efficiency. However, there is still the issue of allowing bi-directional communication, that is, in the uplink and download directions, without interference.

In order to enable bi-directional communication between two nodes, two well known different approaches exist for duplexing the two (forward or downlink and reverse or uplink) communication links to overcome the physical limitation that a device cannot simultaneously transmit and receive on the same resource medium. The first, frequency division duplexing (FDD), involves operating the two links simultaneously but on different frequency bands by subdividing the transmission medium into two distinct bands, one for DL and the other for UL communications. The second, time division duplexing (TDD), involves operating the two links on the same frequency band, but subdividing the access to the medium in time so that only the DL or the UL will be utilizing the medium at any one point in time. Although both approaches have their merits and the IEEE802.16 standard incorporates both an FDD and TDD mode, the remainder of this description will mainly refer to the TDD mode.

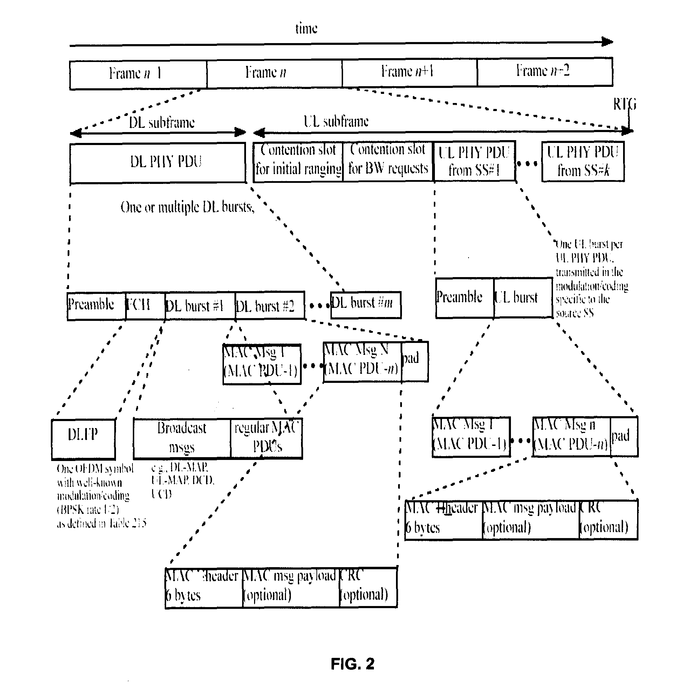

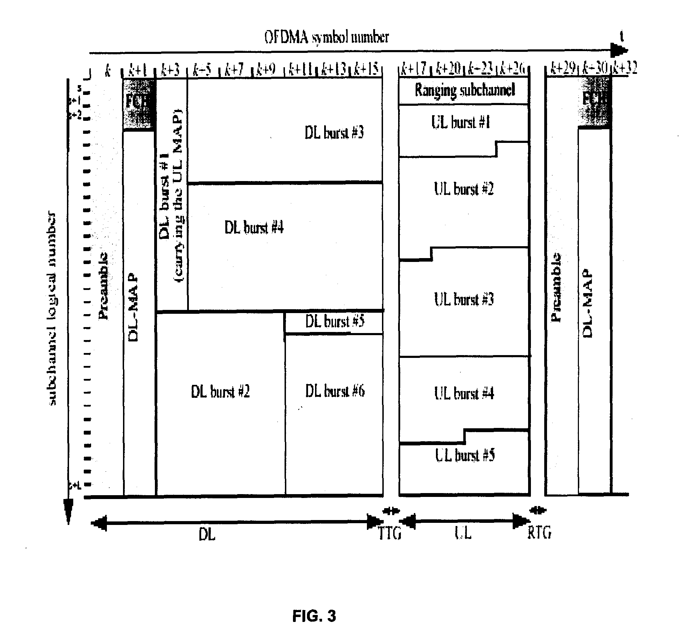

Figures 2 and 3 illustrate the TDD frame structure used in the OFDM/OFDMA physical layer mode of the IEEE802.16 standard (WiMAX).

Referring first to Fig. 2, this shows an OFDM TDD frame structure from a packet perspective. The UL subframe shown in Fig. 2 first provides a contention slot for initial ranging. Initial ranging is the process by which an MS is admitted to the network, and involves the MS using the slot, on a contended basis (that is, in competition with any similar ranging requests from other users) to send an ID code to the BS, commonly referred to as a CDMA based ranging request. The BS responds to receipt of a ranging code by making a resource allocation on the next UL subframe. Although the BS does not yet know which MS made the CDMA based ranging request, the intended recipient is able to use the allocated resource to reply with a message (typically RNG-REQ, a MAC management message as referred to below) to identify itself and start off the network entry procedure.

The next resource allocated within the UL subframe is a contention slot for BW requests, which is used by any of the subscriber stations (again on a contended basis) to request bandwidth from the base station. A similar procedure may be followed as just outlined for initial ranging.

Fig. 2 further illustrates, within the UL-subframe, a packet format having two parts, a PHY header and a MAC PDU. The MAC PDU in turn consists of a MAC header, an optional payload, and optional error check code (cyclic redundancy code or CRC). The PHY header includes training sequences. Within the MAC PDU, the MAC header normally gives essential parameters for media access, such as the type of header, CID, and format of the PDU (e.g. whether it is encrypted, length) etc. The CRC within MAC PDU is optional, and can be used to check the integrity of the received MAC PDU. The payload within MAC PDU contains the data which the MS wishes to send to the BS, but is also optional.

In general, the payload of the DL or UL MAC PDU can include any of a set of predefined MAC messages (Mmsg). These include a Channel measurement Report Request (REP-REQ) and a Channel measurement Report Response (REP-RSP). Furthermore, a subheader may be included immediately after the generic MAC header of a MAC PDU.

The same basic structure is also employed in OFDMA, although there are some differences in the PHY layer signalling. The OFDMA physical layer divides the available OFDM symbols and component sub-carriers (see Fig. 3) into distinct logical and physical subchannels, allowing multiple bursts to co-exist in each time interval. On the downlink, a single burst may be shared by several users (subscriber stations) but on the uplink, each burst generally corresponds to a single user.

In Fig. 3, the frame can be considered to occupy a given length of time and a given frequency band, the time dimension being denoted in Fig. 3 by "OFDMA symbol number", and the frequency dimension by "subchannel logical number" (each subchannel is a set of the sub-carriers referred to above). Each frame is divided into DL and UL subframes, each being a discrete transmission interval. They are separated by a Transmit/Receive and Receive/Transmit Transition Guard interval (TTG and RTG respectively). Each DL subframe starts with a preamble followed by the Frame Control Header (FCH), the DL-MAP, and, if present, the UL-MAP. The FCH contains the DL Frame Prefix (DLFP - see also Fig. 2) to specify the burst profile and the length of the DL-MAP. The DLFP is a data structure transmitted at the beginning of each frame and contains information regarding the current frame; it is mapped to the FCH. DL allocations can be broadcast, multicast and unicast and they can also include an allocation for another BS rather than a serving BS. UL allocations are either unicast data burst allocations or contended regions for ranging or bandwidth requests.

The DL-subframe includes a broadcast control field with a DL-MAP and UL-MAP, by which the BS informs the receiving device of the frame structure. The MAP is a map of bandwidth allocation in the frame and also contains other PHY signalling related messages. It consists of Information Elements (IE). The map IEs that define data burst allocations usually contain IDs to inform mobile stations to which burst(s) they have been assigned to transmit and receive information. Thus, in a TDD and FDD mode network, bandwidth allocation means the allocation of resources (slots) within frames. The DL-MAP and UL-MAP are examples of management messages broadcast by the BS (that is, transmitted to all subscribers). The areas marked UL burst#1 to #5 in Fig. 3 represent allocations to respective users for their data transmissions to the BS during the UL subframe. In the example of Fig. 3, each UL burst extends over the whole of the time dimension (the duration of the UL subframe) but occupies a different part of the available frequency dimension (subcarriers). However, as illustrated in the DL subframe of Fig. 3, the burst structure may be more complicated than this, with multiple bursts sharing the same frequencies but separated in time.

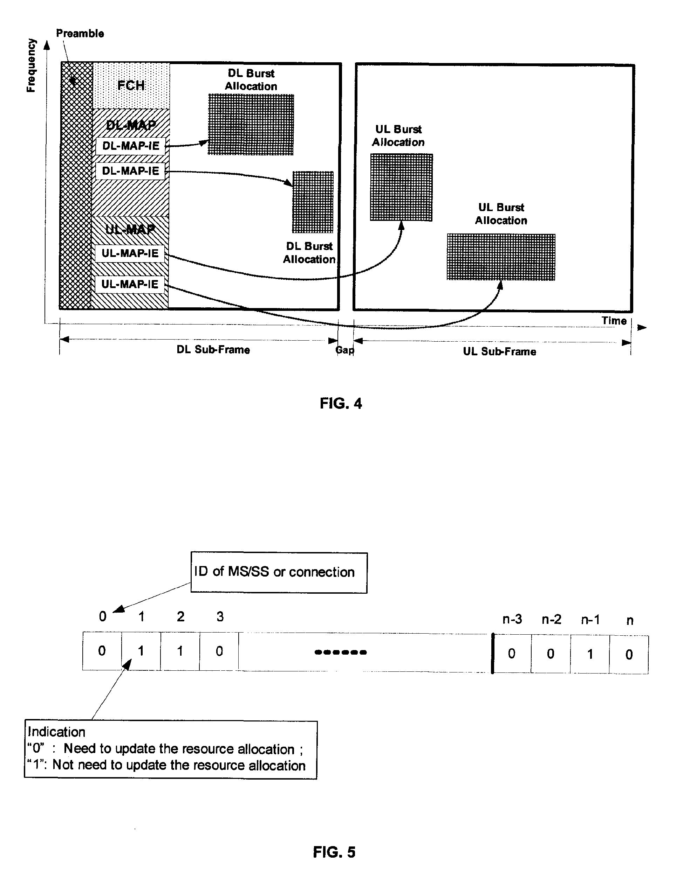

Fig. 4 shows the frame structure more schematically in an example (TDD mode, OFDMA) wherein each burst has a "2xD" structure, having a defined extent in both frequency and time dimensions. Obviously in this case the MAP-IE has to inform the MS concerned of not only the part of the frequency spectrum, but also the portion of the subframe duration, in which the burst is placed. In the example of Fig. 4, each MS is allocated a 2xD burst both within the UL subframe, for transmitting data on the uplink to the BS, and within the DL subframe, for reception of data on the downlink. This necessitates both a DL-MAP and UL-MAP at the start of the DL subframe with respective MAP-IEs linking bursts to respective mobile stations and their connections, as indicated by arrows in the Figure. In the case of services such as video streaming, the amount of resource allocation on the downlink may need to be many times as large as that on the uplink. Incidentally, in OFDMA, the UL subframe in practice has a "snake-like" configuration in which the allocations of respective users begin in the top left-hand corner, progress in time across the whole duration of the subframe, then increment in frequency as shown in Fig. 3. In this way it is possible for the allocation to one user to extend over the whole duration of the subframe as well as over multiple subchannels. Fig. 4 should therefore be regarded only as illustrative for the uplink subframe.

Considerable overhead is involved in signalling to each MS its resource allocation in the current frame. This is wasteful of system resources when the resource allocation to a particular subscriber station may be unchanged for several frames.

Accordingly, there is a need to signal resource allocation to subscriber stations in a more efficient manner in such scenarios where the allocation persists over multiple frames.

According to a first aspect of the present invention, there is provided a wireless communication system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in the frames; wherein: the base station is arranged to provide to the subscriber stations, in addition to said resource allocation information, a list indicative of the subscriber stations or connections for which the allocation of resources has changed.

According to a second aspect of the present invention, there is provided a wireless communication system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in the frames; wherein: the base station is arranged to provide to the subscriber stations, in addition to said resource allocation information for each subscriber station, a period of validity of the resource allocation information during which the resource allocation to the subscriber station will not be changed.

According to a third aspect of the present invention, there is provided a wireless communication method used in a wireless communication system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in every frame; wherein the base station provides to the subscriber stations, in addition to said resource allocation information in the frame, a list indicative of the subscriber stations or connections for which the allocation of resources has changed; the subscriber stations check the list to identify themselves, and each subscriber station identified in the list decodes the resource allocation information and alters its communication settings with the base station in accordance with the resource allocation information, whereas each subscriber station not identified in the list ignores the resource allocation information and continues using the same communication settings as before.

According to a fourth aspect of the present invention, there is provided a wireless communication method in a system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in the frames; wherein: the base station provides to the subscriber stations, in addition to said resource allocation information for each subscriber station, a period of validity of the resource allocation information during which the resource allocation to the subscriber station will not be changed, and each subscriber station, upon receipt of resource allocation information with said period of validity, ignores subsequent resource allocation information for the duration of the period of validity.

Further aspects of the present invention are as defined in the accompanying claims.

Reference is made, by way of example only, to the accompanying drawings in which:
Fig.1 shows protocol layering in accordance with an IEEE 802.16 wireless communication system;
Fig.s 2 and 3 are for explaining a TDD mode frame format used in an IEEE 802.16 wireless communication system, Fig. 2 showing the frame structure at the packet level and Fig. 3 showing the structure at the burst level;
Fig. 4 is a simplified view of the frame structure highlighting resource allocation using MAP-IEs;
Fig. 5 is for explaining a bit map used to indicate requirements for updating a resource allocation, in one example of a first embodiment of the present invention;
Fig. 6 is a flowchart of a signalling method employed in the first embodiment of the present invention; and
Fig. 7 is a flowchart of a signalling method employed in a second embodiment of the present invention.

As outlined in the above introduction, in OFDMA-based communication systems (e.g. 802.16-2004 and 802.16e-2005), in order to allocate resources to each fixed or mobile subscriber station (MS) within its cell, the base station (BS) first schedules the two-dimensional (2xD, frequency and time dimension) resource allocation and the relevant transmission parameters, such as transmission power, modulation and coding schemes for the connections with each MS. Then the BS informs the allocation and the related information to each MS by using broadcast messages, such as MAP-IEs (MAP Information Elements) in 802.16e-2005 (as shown in Fig. 4) in the MAP message.

However, the signalling overhead in existing OFDMA-based communication systems is high in comparison with other communication systems, such as CDMA-based systems, mainly because of the need for signalling a 2xD allocation on the DL and UL. In known OFDMA-based communication systems, such as 802.16-2004 and 802.16e-2005, the BS needs to inform the allocation and relevant information to each MS on a frame-by-frame basis, even if the current allocation or relevant parameters are the same as the previous frame. However, for some service types, such as voice, and video streaming, or for T1/E1-like channelized connections, the allocation may be unchanged for the entire communication session. Therefore, informing the same resource allocation information to the MSs for multiple frames will entail extra overhead. Meanwhile, each MS has to decode the whole MAP to find out its resource allocation, which incurs extra processing overhead at the MS. The present invention provides two embodiments as alternative techniques to save signalling overhead for both the DL and UL, and save processing overhead for MSs.

The first embodiment, described in more detail below, involves listing the IDs (identifications) of the MSs or connections whose resource allocation has been modified, cancelled, or initialized, at the beginning of the frame. This allows other mobile stations, for which no relevant information is contained in the list, to omit decoding the resource allocation information in the current frame. In this arrangement, the BS does not need to repeat unchanged resource allocation information to MSs. Only when the BS needs to cancel, modify, or initialize the resource allocation, must the BS inform the allocation information to the MSs.

In the second embodiment, the BS allocates "persistent" resources to particular services for a certain time period, henceforth called a "valid duration". In this case, the BS can indicate the valid duration for each item of resource allocation information, thus avoiding the need to repeat the same allocation information within this valid duration, and the MSs will keep using this same resource allocation information within the valid duration. This arrangement has the added benefit that the MS does not risk missing any "modify" messages causing potential loss of data.

These embodiments will now be explained in more detail.

### First embodiment: Signalling method by ID (identification) list

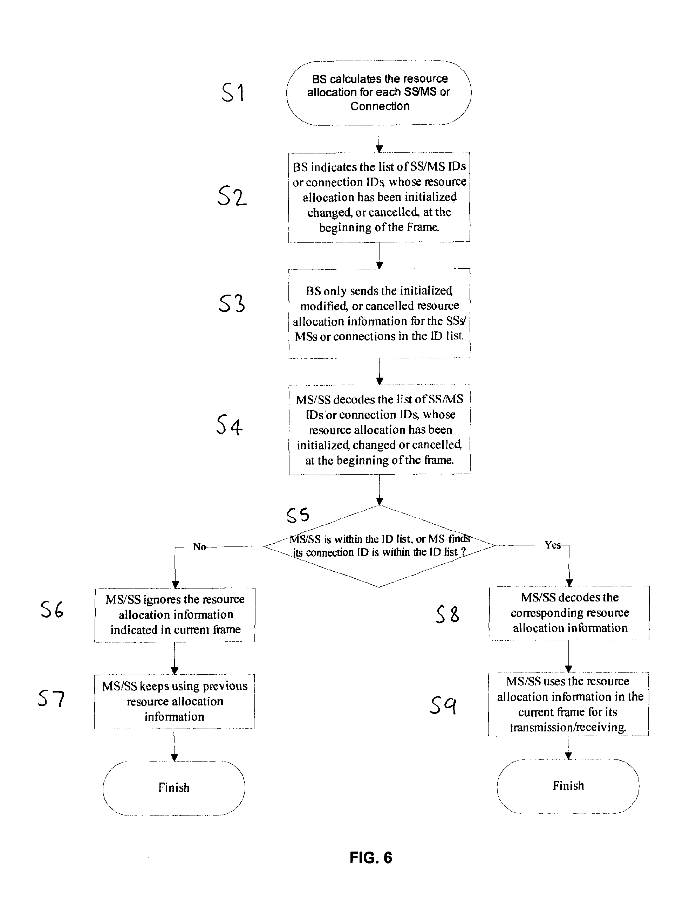

Figure 6 shows the flow chart of this embodiment, in which the signalling method uses an ID list.

The BS first calculates the resource allocation for each MS or connection (Fig. 6, step S1). Then the BS constructs the list of MS IDs or connection IDs, whose resource allocation is initialized, modified, or cancelled in the current frame (S2). The list may be compiled collectively for both DL and UL, or separate lists may be compiled for each subframe. The BS then sends (S3) the corresponding resource allocation information within the current frame. In step S4, the MS first checks whether its own ID, or the connection ID of its connection with the BS (below, "relative connection ID"), is listed within the frame, for either or both subframes.

If it is listed (step S5, "Yes"), then the MS decodes its resource allocation information (S8), and use these parameters for its receiving and transmission (S9). The MS may send an acknowledgement back to the BS, when it notices that its ID is in the list. If MS/SS cannot find its ID or relative connection ID within the ID list (S5, "No"), the MS ignores the resource allocation information (S6) and keeps using previously obtained resource allocation parameters, if any, for its transmission and receiving (S7). If the MS cannot decode the MAP information correctly (a check can be facilitated by the CRC), then the data burst in that frame should not be attempted to be decoded (or if it is, then its integrity should be scrutinised as an allocation change could have been missed).

Applying the above principle to an IEEE802.16e-2005 system by way of example, the BS uses the DL-MAP/UL-MAP to instruct the MSs of the resource allocation, as outlined earlier with reference to Fig.s 3 and 4. Within the DL-MAP/UL-MAP, multiple MAP-IEs (MAP information elements) are used to describe each burst allocation.

The list of MS IDs/connection IDs affected by changes in resource allocation is included near the beginning of the frame (more specifically, the DL-subframe). By including this information early in the frame (for example, immediately after the FCH of Fig. 3 or 4 and before the DL-MAP and UL-MAP), the receiving mobile stations are able to check the list to see whether or not it is necessary for them to decode the DL-MAP and UL-MAP. Here, "early" and "before" refer primarily to an arrangement that results in the ID list being decoded in the receiver before the MAP message. The order of slot mapping is usually starting from the lowest numbered subchannel on the lowest numbered symbol in the frame, i.e. the top left corner of the frame in Figure 4. Mapping increases in the frequency direction first before an increase in the symbol number once the highest numbered subchannel is reached. Therefore, referring to Figure 4, the ID list would be directly below the FCH on the same symbols.

In one example of the first embodiment, the following information listed in Table 1 is incorporated into the DL-MAP/UL-MAP as an IE or a separated message body/entity within the frame that can be decoded prior to decoding of the MAP message, or incorporated into the frame as an independent entity, preferably ahead of (i.e. above the location of in Fig. 4) the MAP information. The MS ID or Connection ID is used to identify each MS whose resource allocation has been updated. The first bit in the table simply indicates whether or not all MSs have to update their resource allocation. If all MSs or connections have to update their resource allocation, then the ID list is not needed, and resource allocation can proceed in the conventional way.

On the other hand, there may be frames in which no changes in resource allocation are needed. A "None Updated" flag (not shown) may be used to denote such an occurrence in order to notify all the subscriber stations that there is no need to consider any DL-MAP and/or the UL-MAP in the current frame.

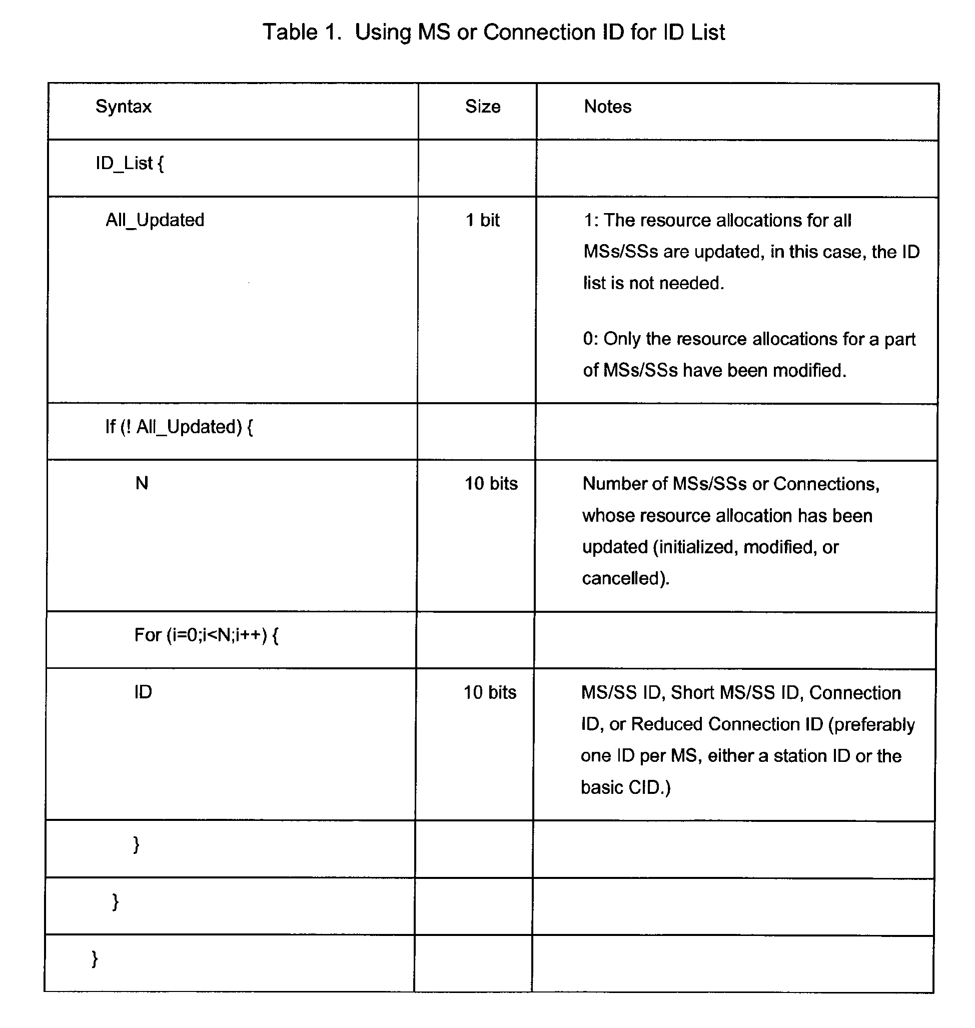

As mentioned above, the information in Table 1 may be constructed as a combined table for both DL and UL, or separate tables may be constructed for each of the DL and UL respectively.

As mentioned, Table 1 is only one example. A variation on the configuration shown in Table 1 is to provide variable field sizes for the parameters "N" and "ID". The field size is then indicated prior to "N", thus further reducing the overhead if the number of users in the cell is small.

In a second example of the first embodiment, a bit map is used to identify the IDs of MSs or connections, whose resource allocations have been updated. The information in Table 2 below can be added into DL-MAP/UL-MAP as an IE, or a separate message body/entity within the frame. After the "all updated" bit (see above), the next item in the table is the length of the bit map, which is decided by the total number of MSs or connections within the cell. Preferably, a specific value of "length of bit map" such as 255 is used to indicate that all MSs need to update the resource allocation, so that no bit map is needed (and making the All Updated bit optional). It should be noted that this bit map is also considered to be a form of "list" within the meaning of the accompanying claims. A bit map may be regarded as a special form of list having a particularly compact and thus bandwidth-efficient form. A bit map is particularly useful if a significant proportion of the users will be scheduled resource information every frame. For example consider the case of 256 users, this would require 256 bits of bit map signalling. For the non bit map approach, this would require 8 bits of signalling for every user scheduled. If more than 32 users are scheduled in a frame, then it is more efficient to use bit map signalling due to the lower signalling overhead.

Following the "Length of bit map" field, there is the Bit Map itself, the structure of which is shown in Fig. 5. Each bit in the bit map is used to indicate an MS or connection, which needs to update the resource allocation. For example, if the third bit is "1", it means that the MS/Connection with ID=2 needs to update its resource allocation. This also means that the user can be allocated a position within the bitmap using some preassigned mapping between the ID and the bitmap position, preferably during network entry.

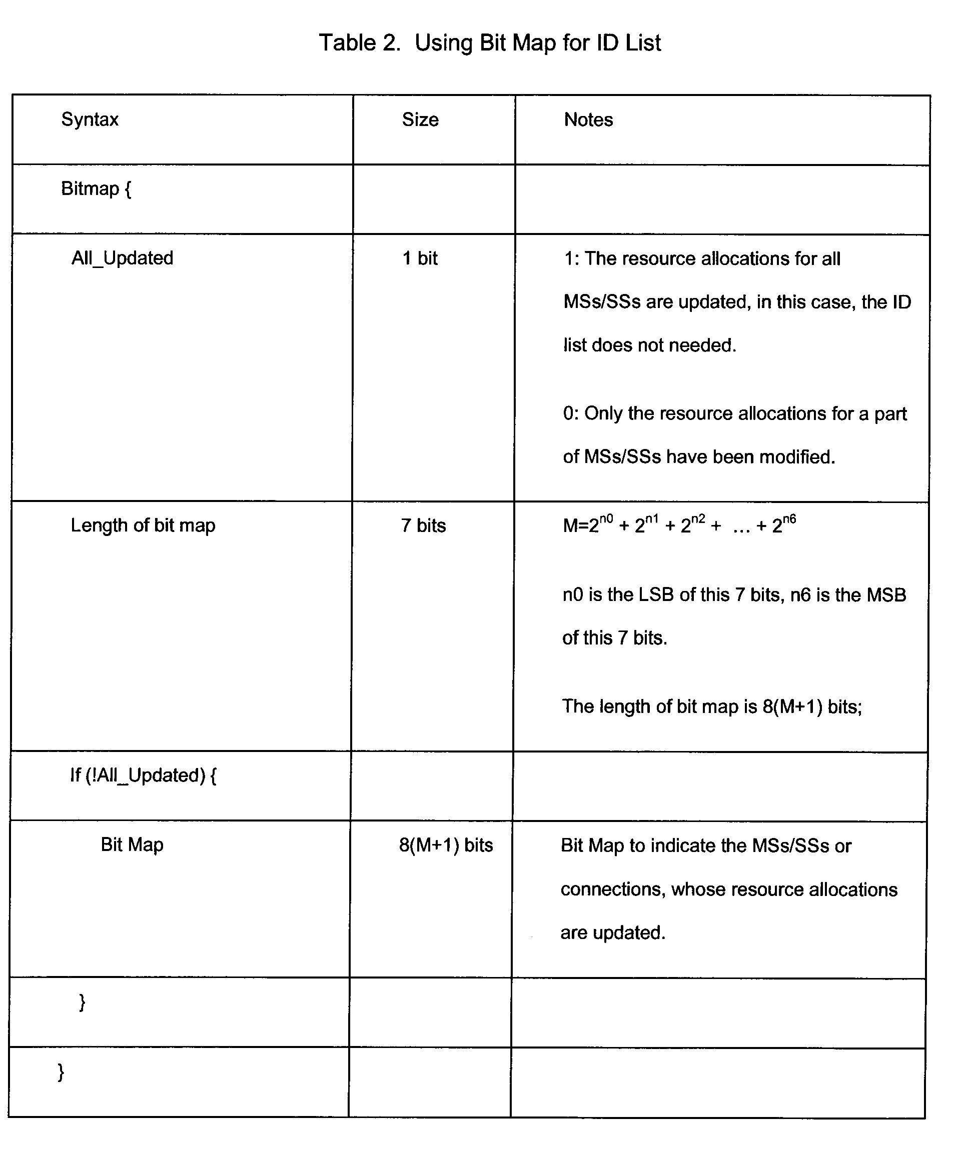

Once again, the bit map may apply jointly to both subframes, or separate bit maps may be formed to apply individually to the DL- and UL-subframes.

Likewise, the processing in the MS may occur collectively for both DL and UL resource allocation, or the DL and UL may be considered separately when separate lists/bit maps are provided by the BS. In other words, it would be possible for an MS to identify itself in a list for DL resource allocation, and thus decode the DL-MAP, whilst continuing to use an existing allocation of resources on the uplink without decoding the UL-MAP, if its ID were absent from a separate list pertaining to UL resource allocation.

Typically, the BS will include one or more lists as described above in every frame. In some applications, however, for example where the subscriber stations are fixed stations, and/or where the traffic on the network is relatively steady, it may be appropriate to update resources less frequently. In such a case the above list(s) need only be included in every n-th frame, where n is an integer.

As a further variation of the first embodiment, it would be possible, in place of a list or bit map indicating those MSs/connections whose resource allocation has changed, to list those mobile stations/connections for which the resource allocation has not changed, allowing the mobile stations listed, or the mobile stations related to the listed connections, to ignore the remainder of the resource allocation information.

### Second embodiment: signalling by using valid duration

For some service types, such as video streaming, voice services, broadcast services, or when supporting channelized connections, such as E1/T1 etc, BS may allocate persistent resources to a particular MS or connection. An appropriate length of persistence may be estimated by the BS, or the BS may have direct knowledge of the required duration of the resource allocation (such as the time duration of a streamed video being transmitted to a particular MS). For example, service flow parameters learned by the base station during establishment of a connection may be used to indicate how long the service flow is anticipated to last. In this case, BS can indicate a value of the "valid duration" of the resource allocation (in other words, a length of time for which the allocation will remain valid) to the corresponding MS/SS or connection. Within this duration,
✔ the resource allocation will not be changed;
✔ the MS/SS will keep using this resource allocation information;
✔ the MS/SS may ignore the allocation information sent by BS;
✔ The BS will not repeat the same allocation information.

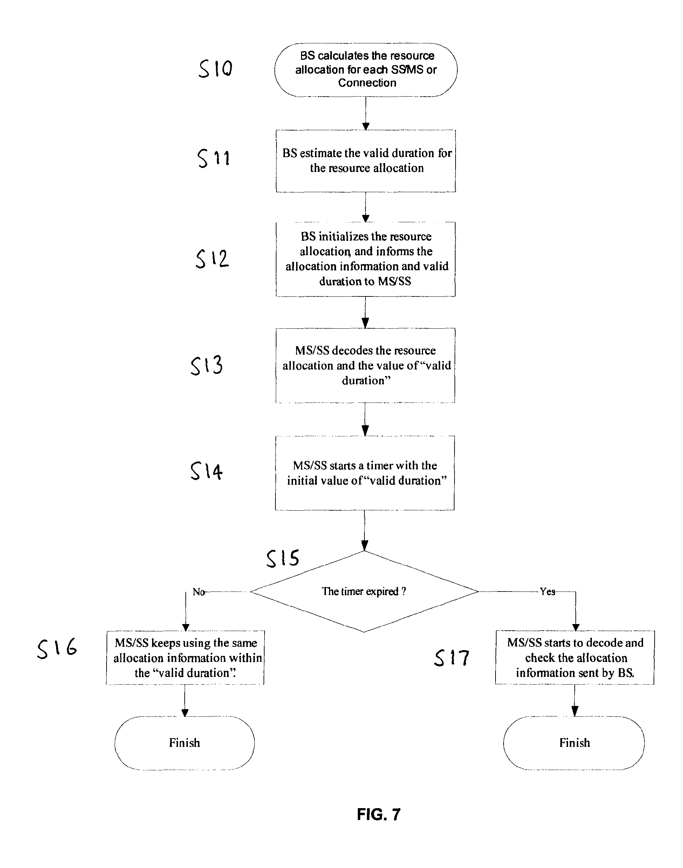

The resource allocation may be every frame, or every n frames where n is an integer more than one. That is, the persistent resource allocation may have a periodicity such that it only appears every other frame, or once every four frames and so on. In the case of a broadcast or multicast connection serving a group of subscriber stations simultaneously, the "valid duration" will of course apply to all the subscriber stations in the group. After this "valid duration", the MS/SS will start to receive and decode the allocation information to see whether or not there is a resource allocation for its connection. Fig. 7 shows the flow chart of this method.

In existing IEE802.16e-2005 proposals, the BS uses DL-MAP/UL-MAP to instruct the resource allocation information as mentioned above with reference to Fig.s 3 and 4. Within DL-MAP/UL-MAP, multiple MAP-IEs (MAP information elements) are used to describe each burst allocation. In the second embodiment, the "valid duration" is added to the resource allocation information, for example directly into the DL-MAP-IE/UL-MAP-IE as an additional field, to indicate the valid duration of this MAP-IE.

Thus, the first step of the flowchart (Fig. 7, step S10), as in Fig. 6, is for the BS to calculate the resource allocation for each MS or connection. The BS then acquires or estimates the valid duration for the resource allocation (S11). To do this, the BS can take account of such factors as the service type (e.g. voice call, video...).

Then, the BS uses the DL-MAP and UL-MAP to inform each MS of its allocated resource along with the valid duration. The valid duration may be expressed, for example, as a time value in milliseconds or a number of frames until the MS should check again for a new resource allocation. The BS constructs a frame including the DL-MAP and UL-MAP near the start of the DL subframe (see Fig. 4) and transmits it to the users within its cell (S12).

The MS receives the transmitted data from the BS, decodes the DL-MAP and UL-MAP (S13), and extracts both the information of the resources allocated to it (including the size and position of DL and/or UL bursts), and the valid duration of this allocation. The MS starts a timer (which could be a counter incremented frame-by-frame) to start counting down the valid duration (S14).

The MS checks whether the timer has expired. If no, (S15, "No") it keeps using the same resource allocation information allocated to it previously (S16). If yes (S15, "Yes"), the MS decodes the DL-MAP and/or UL-MAP contained in the next-received DL subframe to check for any new allocation information (S17). The BS may be arranged to send new allocation information unconditionally at the expiry of the valid duration, even if there is no actual change required in the resource allocation; alternatively, BS may omit the MAP-IE for an MS for which no change in resource allocation is required, allowing the MS to continue to use the existing resource allocation until positively rescinded by a new MAP-IE from the BS.

As in the first embodiment, the BS may process the whole frame, or may consider the DL- and UL-subframes separately. That is, processing at the BS and in each MS may proceed through the steps in Fig. 7 either once per frame to deal with both subframes jointly, or twice to handle resource allocation in each subframe individually. In either case, of course, the BS will need to complete the estimation and setting of "valid duration" values before transmitting the current frame, and processing at each MS should occur as quickly as possible after receipt of the DL-MAP and UL-MAP so that any adjustments required on the MS side can be made in time to process the subsequent bursts.

Thus, an aspect of a first form of the present invention provides a wireless communication system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in every frame; wherein the base station is arranged to provide to the subscriber stations, in addition to said resource allocation information, a list indicative of the subscriber stations or the connections for which the allocation of resources has changed.

Preferably, the list applies to resource allocation on a downlink from the base station to each of the subscriber stations. The list may also apply to resource allocation on an uplink from the subscriber stations to the base station. Typically, each frame is divided into a downlink subframe and an uplink subframe, and said resource allocation information is provided for both the downlink subframe and the uplink subframe.

Preferably, the list identifies subscriber stations for which resource allocation has changed on at least one of the downlink subframe and the uplink subframe. Two such lists may be provided by the base station to the subscriber stations, one list for the downlink subframe and one for the uplink subframe; alternatively one list is provided by the base station as a combined list for both the downlink subframe and the uplink subframe. Preferably, the list(s) is provided in every frame. In a configuration where each frame is configured as an ordered sequence of slots, the or each list is desirably located earlier in said sequence than the resource allocation information.

Preferably, each connection has an associated ID and the list includes the IDs of connections for which resource allocation has changed. Instead, or in addition, each of the subscriber stations has an associated ID and the list preferably includes the IDs of subscriber stations for which the resource allocation has changed.

In one embodiment the list includes a bit map in which each bit represents an individual subscriber station or an individual connection and its binary value indicates whether the resource allocation has changed for that subscriber station.

Each subscriber station is preferably arranged to decode the or each list and, in response to determining the presence of its associated ID in the list, to send an acknowledgement to the base station. In this case the base station is further arranged to process acknowledgements received from the subscriber stations to determine whether to repeat the relevant resource allocation information in the next frame.

In the above, a "changed" resource allocation can be a resource allocation which has been modified, cancelled, or initiated.

The system may be an OFDMA TDD-based system wherein the resource allocation information includes a DL-MAP and a UL-MAP and the list is provided between a frame control header of each frame and the DL-MAP and UL-MAP.

Preferably, the list includes an "all-updated" flag to indicate whether the resource allocation for all the subscriber stations has changed, and/or a "none-updated" flag to indicate whether the resource allocation for none of the subscriber stations has changed.

In another aspect, the present invention provides a base station for use in a wireless communication system together with a plurality of fixed or mobile subscriber stations, the base station operable to maintain connections with each of the subscriber stations by performing wireless communication in units of frames, and comprising resource allocation means for allocating resources to each of the subscriber stations for communication with the base station and for including resource allocation information in every frame, the resource allocation means being arranged to provide to the subscriber stations, in addition to said resource allocation information, a list indicative of the subscriber stations or the connections for which the allocation of resources has changed.

Preferably, each frame is divided into a downlink subframe and an uplink subframe, said resource allocation means providing the resource allocation information for both the downlink subframe and the uplink subframe, wherein the resource allocation means constructs at least one list which identifies subscriber stations for which the resource allocation has changed on at least one of the downlink subframe and the uplink subframe.

Preferably, the resource allocation information includes a DL-MAP and a UL-MAP and the resource allocation means inserts the or each list ahead of the resource allocation information within the frame. The base station may further comprise a memory for storing an ID identifying each said subscriber station and/or its connection with the base station, the resource allocation means including the IDs in the or each list.

A further aspect provides a subscriber station for use in a wireless communication system, the system comprising a base station and a plurality of such subscriber stations, the base station maintaining connections with each of the subscriber stations by performing wireless communication in units of frames, allocating system resources to each of the subscriber stations, and notifying the subscriber stations of resource allocation information in every frame, wherein the subscriber station comprises a frame decoder including means for identifying its own subscriber station in a list provided by said base station in addition to of the resource allocation information in the frame.

Preferably, the subscriber station is arranged, in the event that the frame decoder identifies its own subscriber station in said list, to decode the resource allocation information and to adjust its internal configuration in response to the resource allocation information thus decoded. In the event that the frame decoder does not identify its own subscriber station in said list, the subscriber station may ignore the resource allocation information and maintain its internal configuration unchanged.

Preferably, the frame decoder is responsive to an "all updated flag" in said list to decode the resource allocation information unconditionally without identifying its own subscriber station in the list.

A further aspect of this form of the invention is a frame format used in a wireless communication system comprising: a downlink subframe for containing downlink data and signalling information to be transmitted from a base station, to subscriber stations of the wireless communication system having a connection to the base station; and an uplink subframe for containing uplink data and signalling information to be transmitted from the subscriber stations to the base station; wherein the downlink subframe includes, precedent to a DL-MAP for allocation of resources in the downlink subframe and a UL-MAP for allocation of resources in the uplink subframe, at least one list identifying subscriber stations or their connections with the base station, for which resource allocation has changed from the preceding frame.

In this frame format, preferably, the list is provided jointly for both the DL-MAP and UL-MAP and occurs directly after a frame control header of the frame.

The present invention also provides a wireless communication method used in a wireless communication system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in every frame; wherein: the base station provides to the subscriber stations, in addition to said resource allocation information in the frame, a list indicative of the subscriber stations for which the allocation of resources has changed; the subscriber stations check the list to identify themselves, and: each subscriber station identified in the list decodes the resource allocation information and alters its communication settings with the base station in accordance with the resource allocation information; whereas each subscriber station not identified in the list ignores the resource allocation information and continues communicating as before.

The present invention further embraces software which, when executed by processors of a base station and subscriber stations in a wireless communication system, performs the above method.

In another form, the present invention provides in one aspect thereof a wireless communication system comprising a base station and a plurality of fixed or mobile subscriber stations, the base station maintaining connections with each of the subscriber stations by performing wireless communication in units of frames, the base station allocating resources to each of the subscriber stations or connections for communication with the base station and including resource allocation information in the frames; wherein: the base station is arranged to provide to the subscriber stations, in addition to said resource allocation information for each subscriber station, a period of validity of the resource allocation information during which the resource allocation to the subscriber station will not be changed.

Preferably, one said connection is a broadcast or multicast connection maintained with a group of the subscriber stations, and the period of validity applies to all of the subscriber stations in the group. This period of validity may be a number of frames.

In addition to said period of validity of the resource allocation, a periodicity of the resource allocation may be set.

Preferably, each subscriber station is arranged to ignore resource allocation information in subsequent frames until expiry of the period of validity.

Preferably also, the base station is arranged to omit from subsequent frames resource allocation information previously transmitted and for which the period of validity has not yet expired.

Each subscriber station may send an acknowledgement to the base station upon receiving said resource allocation information, and the base station may omit from subsequent frames resource allocation information in respect of which an acknowledgement has been received.

Preferably, each subscriber station is arranged to count down the period of validity and upon expiry thereof, to decode subsequent resource allocation information received from the base station.

In an embodiment each frame is divided into a downlink subframe and an uplink subframe, and said period of validity is provided for resource allocation information of both the downlink subframe and the uplink subframe. Alternatively, the period of validity is provided separately for each of the downlink subframe and uplink subframe.

As before, a "changed" resource allocation may be one which has been modified, cancelled, or initiated.

One embodiment of the system in this form of the invention is an OFDMA TDD-based system wherein the resource allocation information includes a DL-MAP and a UL-MAP each containing MAP-IEs which identify connections between the subscriber stations and the base station, and the period of validity is added to MAP-IEs in each of the DL-MAP and UL-MAP.

Another aspect of this form of the invention is a base station for use in a wireless communication system together with a plurality of fixed or mobile subscriber stations, the base station operable to maintain connections with each of the subscriber stations by performing wireless communication in units of frames, and comprising resource allocation means for allocating resources to each of the subscriber stations for their communications with the base station and for including resource allocation information in the frames, the resource allocation means being arranged to provide to the subscriber stations, in addition to said resource allocation information, a period of validity during which the resource allocation will not change.

The base station is preferably arranged to omit from subsequent frames resource allocation information previously transmitted and for which the period of validity has not yet expired.

In one embodiment each frame is divided into a downlink subframe and an uplink subframe, and said resource allocation means provides resource allocation information for both the downlink subframe and the uplink subframe, wherein the resource allocation means is arranged to include said period of validity for the resource allocation information of at least one of the downlink subframe and the uplink subframe.

More particularly, the base station may be for use in an OFDMA TDD-based system wherein the resource allocation information includes a DL-MAP and a UL-MAP each containing MAP-IEs which identify connections between the subscriber stations and the base station, and the resource allocation means is configured to add the period of validity to the MAP-IEs in each of the DL-MAP and UL-MAP.

A further aspect is a subscriber station for use in a wireless communication system comprising a base station and a plurality of such subscriber stations, the base station maintaining connections with each of the subscriber stations by performing wireless communication in units of frames, allocating system resources to each of the subscriber stations, and notifying the subscriber stations of resource allocation information in the frames, wherein the subscriber station comprises a frame decoder including means for extracting a period of validity from the resource allocation information, the subscriber station being responsive to the period of validity to ignore resource allocation information received in subsequent frames for the duration of the period of validity.

The subscriber station preferably has a timer for counting down the period of validity and upon expiry thereof, to decode subsequent resource allocation information received from the base station.

Another aspect of this form of the invention is a wireless communication method in a system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in the frames; wherein: the base station provides to the subscriber stations, in addition to said resource allocation information for each subscriber station, a period of validity of the resource allocation information during which the resource allocation to the subscriber station will not be changed, and each subscriber station, upon receipt of resource allocation information with said period of validity, ignores subsequent resource allocation information for the duration of the period of validity.

Software may be executed by processors of a base station and subscriber stations in a wireless communication system, to perform the above method.

To summarise, the present invention provides a signalling method in a frame-based wireless communication system allowing a base station (BS) to inform fixed or mobile subscriber stations (MS) of resource allocations without excessive signalling and processing overhead. In one embodiment, in addition to normal resource allocation information such as a DL-MAP or UL-MAP, IDs of MSs or connections for which the resource allocation has been modified, cancelled, or initialized, are listed at the start of the frame, allowing each MS to identify itself (or its connection) in the list. Only those mobile stations for which the list is relevant need to act on the resource allocation information. In another embodiment, the BS attaches a period of validity to each allocation of resources which is transmitted along with the normal resource allocation information. This frees the BS from having to repeat the same information in subsequent frames, and each MS can go on using the same resource during the period of validity without needing to check for updates.

The present invention may take the form of a novel BS or MS, or hardware modules for the same, and can be implemented by replacing or modifying software executed by processors of the BS and/or each MS. In systems wherein relay stations are provided having some of the functionality of a base station, the present invention may also be applied to each relay station.

Thus, embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality of the above-described subsystem. The invention may also be embodied as one or more device or apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form.

Although the above description has referred to an IEEE 802.16 wireless communication system by way of example, the invention may be applied to other frame-based communication systems in which resource allocation is possible on a frame-by-frame basis.

## Claims

1. A wireless communication system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in every frame; wherein:
the base station is arranged to provide to the subscriber stations, in addition to said resource allocation information, a list indicative of the subscriber stations or the connections for which the allocation of resources has changed.

2. The wireless communication system according to claim 1 wherein the list applies to resource allocation on at least one of a downlink from the base station to each of the subscriber stations and an uplink from the subscriber stations to the base station.

3. The wireless communication system according to claim 2, wherein the list identifies subscriber stations for which resource allocation has changed on at least one of the downlink subframe and the uplink subframe.

4. The wireless communication system according to claim 2 or 3, wherein two said lists are provided by the base station to the subscriber stations, one list for the downlink subframe and one for the uplink subframe.

5. The wireless communication system according to any preceding claim wherein each connection and/or each subscriber station has an associated ID and the list includes the IDs of connections for which resource allocation has changed.

6. The wireless communication system according to any preceding claim wherein the list includes a bit map in which each bit represents an individual subscriber station or an individual connection and its binary value indicates whether the resource allocation has changed for that subscriber station.

7. The wireless communication system according to any preceding claim wherein each subscriber station is arranged to decode the or each said list and, in response to determining the presence of its associated ID in the list, to send an acknowledgement to the base station.

8. The wireless communication system according to claim 7 wherein the base station is further arranged to process acknowledgements received from the subscriber stations to determine whether to repeat the relevant resource allocation information in the next frame.

9. A base station for use in a wireless communication system together with a plurality of fixed or mobile subscriber stations, the base station operable to maintain connections with each of the subscriber stations by performing wireless communication in units of frames, and comprising resource allocation means for allocating resources to each of the subscriber stations for communication with the base station and for including resource allocation information in every frame, the resource allocation means being arranged to provide to the subscriber stations, in addition to said resource allocation information, a list indicative of the subscriber stations or the connections for which the allocation of resources has changed.

10. A subscriber station for use in a wireless communication system, the system comprising a base station and a plurality of such subscriber stations, the base station maintaining connections with each of the subscriber stations by performing wireless communication in units of frames, allocating system resources to each of the subscriber stations, and notifying the subscriber stations of resource allocation information in every frame, wherein the subscriber station comprises a frame decoder including means for identifying its own subscriber station in a list provided by said base station in addition to of the resource allocation information in the frame.

11. A frame format used in a wireless communication system comprising:
a downlink subframe for containing downlink data and signalling information to be transmitted from a base station, to subscriber stations of the wireless communication system having a connection to the base station; and
an uplink subframe for containing uplink data and signalling information to be transmitted from the subscriber stations to the base station; wherein
the downlink subframe includes, precedent to a DL-MAP for allocation of resources in the downlink subframe and a UL-MAP for allocation of resources in the uplink subframe, at least one list identifying subscriber stations or their connections with the base station, for which resource allocation has changed from the preceding frame.

12. A wireless communication method used in a wireless communication system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in every frame; wherein:
the base station provides to the subscriber stations, in addition to said resource allocation information in the frame, a list indicative of the subscriber stations for which the allocation of resources has changed;
the subscriber stations check the list to identify themselves, and:
each subscriber station identified in the list decodes the resource allocation information and alters its communication settings with the base station in accordance with the resource allocation information; whereas
each subscriber station not identified in the list ignores the resource allocation information and continues communicating as before.

13. A wireless communication system comprising a base station and a plurality of fixed or mobile subscriber stations, the base station maintaining connections with each of the subscriber stations by performing wireless communication in units of frames, the base station allocating resources to each of the subscriber stations or connections for communication with the base station and including resource allocation information in the frames; wherein:
the base station is arranged to provide to the subscriber stations, in addition to said resource allocation information for each subscriber station, a period of validity of the resource allocation information during which the resource allocation to the subscriber station will not be changed.

14. The wireless communication system according to claim 13 wherein one said connection is a broadcast or multicast connection maintained with a group of the subscriber stations, and the period of validity applies to all of the subscriber stations in the group.

15. The wireless communication system according to claim 13 or 14 wherein each subscriber station is arranged to ignore resource allocation information in subsequent frames until expiry of the period of validity.

16. The wireless communication system according to any of claims 13 to 15 wherein the base station is arranged to omit from subsequent frames resource allocation information previously transmitted and for which the period of validity has not yet expired.

17. The wireless communication system according to any of claims 13 to 16 wherein each subscriber station is arranged to send an acknowledgement to the base station upon receiving said resource allocation information.

18. The wireless communication system according to claim 17 wherein the base station is arranged to omit from subsequent frames resource allocation information in respect of which an acknowledgement has been received.

19. The wireless communication system according to any of claims 13 to 18 wherein each subscriber station is arranged to count down the period of validity and upon expiry thereof, to decode subsequent resource allocation information received from the base station.

20. The wireless communication system according to any of claims 13 to 19 wherein each frame is divided into a downlink subframe and an uplink subframe, and said period of validity is provided for resource allocation information of at least one of the downlink subframe and the uplink subframe.

21. A base station for use in a wireless communication system together with a plurality of fixed or mobile subscriber stations, the base station operable to maintain connections with each of the subscriber stations by performing wireless communication in units of frames, and comprising resource allocation means for allocating resources to each of the subscriber stations for their communications with the base station and for including resource allocation information in the frames, the resource allocation means being arranged to provide to the subscriber stations, in addition to said resource allocation information, a period of validity during which the resource allocation will not change.

22. A subscriber station for use in a wireless communication system comprising a base station and a plurality of such subscriber stations, the base station maintaining connections with each of the subscriber stations by performing wireless communication in units of frames, allocating system resources to each of the subscriber stations, and notifying the subscriber stations of resource allocation information in the frames, wherein the subscriber station comprises a frame decoder including means for extracting a period of validity from the resource allocation information, the subscriber station being responsive to the period of validity to ignore resource allocation information received in subsequent frames for the duration of the period of validity.

23. A wireless communication method in a system comprising a base station and a plurality of fixed or mobile subscriber stations, the base station maintaining connections with each of the subscriber stations by performing wireless communication in units of frames, the base station allocating resources to each of the subscriber stations for communication with the base station and including resource allocation information in the frames; wherein:
the base station provides to the subscriber stations, in addition to said resource allocation information for each subscriber station, a period of validity of the resource allocation information during which the resource allocation to the subscriber station will not be changed, and each subscriber station, upon receipt of resource allocation information with said period of validity, ignores subsequent resource allocation information for the duration of the period of validity.

24. Software which, when executed by processors of a base station and subscriber stations in a wireless communication system, performs the method according to claim 12 or 23.
